# EUROPEAN PATENT APPLICATION

(11) **EP 3 950 094 A1**
(43) Date of publication of application: **09.02.2022**
(21) Application number: 20783186.8
(22) Date of filing: 12.03.2020
(51) Int. Cl.: B01D 53/32, B01D 53/60, C25B 1/04

(54) **EXHAUST GAS PURIFICATION SYSTEM FOR REDUCING FINE DUST**

(30) Priority: 29.03.2019 KR 20190036526; 02.04.2019 KR 20190038228; 27.06.2019 KR 20190077347
(71) Applicant: GT Co., Ltd., Ulsan 44611 (KR)
(72) Inventor: KIM, Gun Tae, Ulju-gun Ulsan 44919 (KR); KIM, Chang Min, Ulju-gun Ulsan 44919 (KR); KIM, Jeong Won, Ulju-gun Ulsan 44919 (KR); YANG, Ye Jin, Ulju-gun Ulsan 44919 (KR); SEONG, A Rim, Ulju-gun Ulsan 44919 (KR)
(74) Representative: Ostertag & Partner Patentanwälte mbB
(86) International application number: PCT/KR2020/003447
(87) International publication number: WO 2020/204393

(57) **Abstract**

The present technology relates to an exhaust gas purification system for purifying exhaust gas containing nitrogen oxides and sulfur oxides which causes the generation of fine dust, the exhaust gas purification system purifying exhaust gas containing nitrogen oxides and sulfur oxides through an electrochemical reaction, thereby enabling the removal of pollutants, such as fine dust, in the air and, at the same time, enabling the production of hydrogen which is an environmentally friendly fuel.

## Description

### [CROSS-REFERENCE TO RELATED APPLICATION]

This application is a National Stage Patent Application of PCT International Patent Application No. PCT/KR2020/003447 (filed on March 29, 2019) under 35 U.S.C.§371, which claims priority to Korean Patent Application Nos. 10-2019-0036526 (filed on March 29, 2019), 10-2019-0038228 (filed on April 2, 2019) , and 10-2019-0077347 (filed on June 27, 2019), which are all hereby incorporated by reference in their entirety.

### [Technical Field]

The present disclosure relates to an exhaust gas purification system for reducing fine dust, capable of purifying an exhaust gas containing nitrogen oxide and sulfur oxide which cause generation of fine dust and producing hydrogen, through an electrochemical reaction.

### [Background]

Recently, the emission of greenhouse gases has continuously increased with industrialization, and a problem of air pollution caused by fine dust has emerged. Fine dust is a pollutant having a particle size range of 0.1 to 10 µm. Among fine dusts, fine dust having a diameter of 10 µm or less (PM 10 grade) is an invisible fine dust particle that causes respiratory diseases, and ultrafine dust having a diameter of 2.5 µm or less (PM 2.5 grade) has a very fine particle size of about 1/30 of the thickness of a human hair, which penetrates deeply into the human alveoli and directly causes respiratory diseases. Representative gaseous pollutants that contribute to the generation of fine dust include sulfur oxide (SOₓ), nitrogen oxide (NOₓ), volatile organic compounds (VOCs), ammonia (NH3), etc.

These fine dust products have been mainly generated in power plants, waste incineration processes, blast furnaces and acrons of steelmaking processes, heat treatment facilities, petroleum refining, and petrochemical product manufacturing processes, etc. In order to remove fine dust particles and nitrogen oxide emitted from these industrial processes, methods such as an electrical dust precipitator, a filter dust collector, and selective catalytic reduction (SCR) have been used.

The electrostatic dust precipitator, which uses the electrostatic principle by corona discharge, has a disadvantage in that it has a high initial installation cost and operation cost, and is affected by an electrical resistance depending on a type of dust particles, and it is thus necessary to deal with the above problem. The filter dust collector should remove dust by physical impact when the dust is accumulated in a dust collecting filter, and thus, has a disadvantage in that the dust collecting filter is damaged or efficiency of the dust collecting filter is lowered, and an additional equipment or an additional cost for dust removal is required, and also has a disadvantage in that a dust layer is not brushed away well from the dust collecting filter or the dust that is brushed off is reattached to an adjacent filter to deteriorate dust collection performance due to a nature of the dust itself, when a concentration of dust is high or a filtration speed is fast. The selective catalytic reduction has an advantage in that installation and operating costs are low because it does not require a catalytic reactor, but has a disadvantage in that a reaction rate should be maintained high and nitrogen oxide removal efficiency is as low as 60% or less.

As a prior patent document related to the technical field of the present disclosure, Korean Patent Publication No. 10-1395594 discloses a complex purification device for harmful gases through which complex pollutants are discharged together.

### [Summary]

An object of the present disclosure is to provide an exhaust gas purification system that removes nitrogen oxide (NOₓ), which is a fine dust product, through an electrochemical reaction.

Another object of the present disclosure is to provide an exhaust gas system that removes sulfur oxide (SOₓ), which is a fine dust product, through an electrochemical reaction.

Still another object of the present disclosure is to provide an exhaust gas purification system capable of producing hydrogen, which is an environmentally friendly fuel, with high purity by utilizing the nitrogen oxide (NOₓ) or sulfur oxide (SOₓ).

Yet another object of the present disclosure is to provide an exhaust gas purification system capable of making fine dust having a size of 0.01 to 100 µm, contained in an exhaust gas a slurry and removing the fine dust.

In order to achieve the object of the present disclosure described above,

an aspect of the present disclosure provides an exhaust gas purification system which includes: a cathode unit including a first accommodation space, a first aqueous solution, and a cathode at least partially submerged in the first aqueous solution; an anode unit including a second accommodation space, a second aqueous solution which is basic, and a metal anode at least partially submerged in the second aqueous solution; and a connection unit configured to connect the cathode unit and the anode unit, wherein a gas containing nitrogen oxide (NOₓ) is injected into the first aqueous solution, the nitrogen oxide injected into the first aqueous solution reacts with water to produce nitric acid (HNO₃), the nitric acid supplies hydrogen ions, and the hydrogen ions and electrons of the cathode react to produce hydrogen.

Another aspect of the present disclosure provides an exhaust gas purification system which includes: a cathode unit including a first accommodation space, a first aqueous solution, and a cathode at least partially submerged in the first aqueous solution; an anode unit including a second accommodation space, a second aqueous solution which is basic, and a metal anode at least partially submerged in the second aqueous solution; and a connection unit configured to connect the cathode unit and the anode unit, wherein a gas containing sulfur oxide (SOₓ) is injected into the first aqueous solution, the sulfur oxide injected into the first aqueous solution reacts with water to produce sulfuric acid (H₂SO₄), the sulfuric acid supplies hydrogen ions, and the hydrogen ions and electrons of the cathode react to produce hydrogen.

Still another aspect of the present disclosure provides an exhaust gas purification system which includes: a reaction space which accommodates an aqueous solution; a cathode at least partially submerged in the aqueous solution in the reaction space; and a metal anode at least partially submerged in the aqueous solution in the reaction space, wherein the nitrogen oxide injected into the aqueous solution reacts with water to produce nitric acid (HNO₃), the nitric acid supplies hydrogen ions, and the hydrogen ions and electrons of the cathode react to produce hydrogen.

Yet another aspect of the present disclosure provides an exhaust gas purification system which includes: a reaction space which accommodates an aqueous solution; a cathode at least partially submerged in the aqueous solution in the reaction space; and a metal anode at least partially submerged in the aqueous solution in the reaction space, wherein the sulfur oxide injected into the aqueous solution reacts with water to produce sulfuric acid (H₂SO₄), the sulfuric acid supplies hydrogen ions, and the hydrogen ions and electrons of the cathode react to produce hydrogen.

Yet another aspect of the present disclosure provides an exhaust gas purification system which includes: a cathode unit including a first accommodation space, an aqueous electrolyte, and a cathode at least partially submerged in the aqueous electrolyte; an anode unit including a second accommodation space, an electrolyte which is a basic, and a metal anode at least partially submerged in the electrolyte; and a solid electrolyte disposed between the cathode unit and the anode unit so that the metal selectively passes through the ionized metal ions, wherein a gas containing nitrogen oxide (NOₓ) is injected into the aqueous electrolyte, the nitrogen oxide injected into the aqueous electrolyte reacts with water to produce nitric acid (HNO₃), the nitric acid supplies hydrogen ions, and the hydrogen ions and electrons of the cathode react to produce hydrogen.

Yet another aspect of the present disclosure provides an exhaust gas purification system which includes: a cathode unit including a first accommodation space, an aqueous electrolyte, and a cathode at least partially submerged in the aqueous electrolyte; an anode unit including a second accommodation space, an electrolyte which is a basic, and a metal anode at least partially submerged in the electrolyte; and a solid electrolyte disposed between the cathode unit and the anode unit so that the metal selectively passes through the ionized metal ions, wherein a gas containing sulfur oxide (SOₓ) is injected into the aqueous electrolyte, the sulfur oxide injected into the aqueous electrolyte reacts with water to produce sulfuric acid (H₂SO₄), the sulfuric acid supplies hydrogen ions, and the hydrogen ions and electrons of the cathode react to produce hydrogen.

Yet another aspect of the present disclosure provides an exhaust gas purification system which includes: a reaction vessel forming a reaction space; an aqueous electrolyte solution accommodated in the reaction space and containing a chlorine anion; a cathode at least partially submerged in the aqueous electrolyte solution in the reaction space; an anode at least partially submerged in an aqueous electrolyte solution in the reaction space, and a power source electrically connected to the cathode and the anode, wherein a gas containing nitrogen oxide (NOₓ) is injected into the aqueous electrolyte solution, the nitrogen oxide injected into the aqueous electrolyte solution reacts with water to produce nitric acid (HNO₃), the nitric acid supplies hydrogen ions, and the hydrogen ions and electrons of the cathode react to produce hydrogen.

Yet another aspect of the present disclosure provides an exhaust gas purification system which includes: a reaction vessel forming a reaction space; an aqueous electrolyte solution accommodated in the reaction space and containing a chlorine anion; a cathode at least partially submerged in the aqueous electrolyte solution in the reaction space; an anode at least partially submerged in an aqueous electrolyte solution in the reaction space, and a power source electrically connected to the cathode and the anode, wherein a gas containing sulfur oxide (SOₓ) is injected into the aqueous electrolyte solution, the sulfur oxide injected into the aqueous electrolyte solution reacts with water to produce sulfuric acid (H₂SO₄), the sulfuric acid supplies hydrogen ions, and the hydrogen ions and electrons of the cathode react to produce hydrogen.

According to the present disclosure, all of the objects of the present disclosure described above may be achieved. Specifically, an exhaust gas containing nitrogen oxide and sulfur oxide may be purified and electricity and hydrogen may be produced, through a spontaneous electrochemical reaction without an external power source.

### [Brief Description of Drawings]

FIG. 1 is a schematic diagram illustrating an operation process of an exhaust gas purification system according to an embodiment of the present disclosure.
FIG. 2 is a schematic diagram illustrating an operation process of an exhaust gas purification system according to another embodiment of the present disclosure.
FIG. 3 is a schematic diagram illustrating an operation process of an exhaust gas purification system according to another embodiment of the present disclosure.
FIG. 4 is a schematic diagram illustrating an operation process of an exhaust gas purification system according to another embodiment of the present disclosure.

### [Detailed Description]

In the present disclosure, nitrogen oxide (NOₓ) is a common term for oxide of nitrogen. Nitrogen oxide (NOₓ) may be, but is not limited to, for example, nitrogen monoxide (NO), nitrogen dioxide (NO₂), or ions thereof.

In the present disclosure, sulfur oxide (SOₓ) is a common term for oxide of sulfur. Sulfur oxide may be, but is not limited to, for example, sulfur dioxide (SO₂), sulfur trioxide (SO₃), or ions thereof.

In the present disclosure, fine dust refers to carbon compounds, organics, inorganics, metals, or a salt thereof, each having a size of 0.01 to 100 µm.

Hereinafter, the configuration and operation of the embodiment of the present disclosure will be described in detail with reference to the drawings.

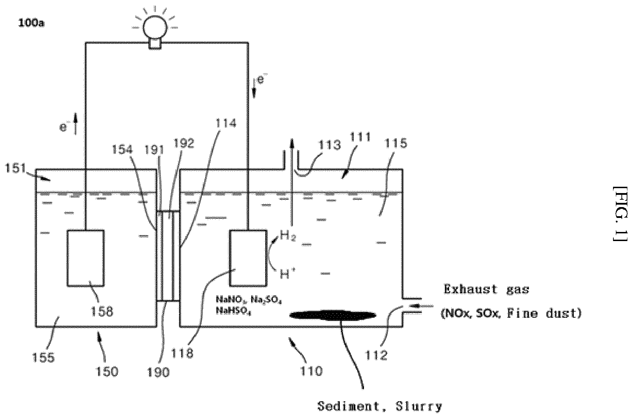

FIG. 1 illustrates the configuration of an exhaust gas purification system according to an embodiment of the present disclosure. Referring to FIG. 1, an exhaust gas purification system 100a according to an embodiment of the present disclosure includes a cathode unit 110 including a first accommodation space 111, a first aqueous solution 115, and a cathode 118 at least partially submerged in the first aqueous solution 115; an anode unit 150 including a second accommodation space 151, a second aqueous solution 155, which is basic, and a metal anode 158 at least partially submerged in the second aqueous solution 155; and a connection unit 190 configured to connect the cathode unit 110 and the anode unit 150.

The exhaust gas purification system 100a according to an embodiment of the present disclosure uses nitrogen oxide (NOₓ) or sulfur oxide (SOₓ), which is a pollutant contained in an exhaust gas, as raw materials through a spontaneous redox reaction to produce electricity and hydrogen (H₂), which is an environmentally friendly fuel.

The cathode unit 110 includes a first aqueous solution 115 contained in a first accommodation space 111, and a cathode 118 at least partially submerged in the first aqueous solution 115.

As the first aqueous solution 115, an alkaline aqueous solution (a basic solution of 1M NaOH is used in the present embodiment), a basic aqueous electrolyte solution, an aqueous electrolyte solution containing chlorine ions, seawater, tap water, distilled water, etc., may be used.

The cathode 118 is an electrode for forming an electrical circuit, and may be carbon paper, carbon fiber, carbon felt, carbon cloth, metal foam, a metal thin film, or combinations thereof, and a platinum catalyst may also be used. In the case of a catalyst, in addition to a platinum catalyst, all other catalysts generally usable as a catalyst for a hydrogen evolution reaction (HER), such as carbon-based catalysts, carbon-metal-based complex catalysts, and perovskite oxide catalysts is also included.

In the cathode unit 110, a first inlet 112 and a first outlet 113, both of which communicate with the first accommodation space 111, are formed. The first inlet 112 is positioned at a lower part of the first accommodation space 111 so that it is positioned below a water surface of the first aqueous solution 115. The first outlet 113 is positioned at an upper part of the first accommodation space 111 so that it is positioned above a water surface of the first aqueous solution 115. Nitrogen oxide (NOₓ) or sulfur oxide (SOₓ) used as a fuel in a reaction process is introduced into the first accommodation space 111 through the first inlet 112, and, if necessary, the first aqueous solution 115 may also be introduced. Hydrogen (H2) produced in a reaction process is discharged to the outside through the first outlet 113. The inlet 112 and the outlet 113 may be selectively opened and closed by a valve (not illustrated), etc., during a reaction in a timely manner. In the cathode unit 110, an elution reaction of nitrogen oxide (NOₓ) or sulfur oxide (SOₓ) occurs during a reaction process.

The anode unit 150 includes a second aqueous solution 155 contained in a second accommodation space 151 and an anode 158 at least partially submerged in the second aqueous solution 155.

As the second aqueous solution 155, a high concentration alkaline solution is used, and, for example, 1 M NaOH or 6 M NaOH may be used.

The anode 158 is a metal electrode for forming an electrical circuit, and it is described in the present embodiment that zinc (Zn) or aluminum (Al) is used as the anode 158.

In addition, a Zn- or Al-containing alloy may be used as the anode 158.

Hereinafter, the reaction process of the exhaust gas purification system 100a described above with respect to the configuration will be described in detail.

FIG. 1 also illustrates the reaction process of the exhaust gas purification system 100a. Referring to FIG. 1, nitrogen oxide (NOₓ) or sulfur oxide (SOₓ) is injected into the first aqueous solution 115 through the inlet 112, and chemical elution reactions of nitrogen oxide (NOₓ) or sulfur oxide (SOₓ) as shown in the following Reaction Scheme 1 and Reaction Scheme 2 occur in the cathode unit 110.

[Reaction Scheme 1] NOx+H₂O→2HNO₃(aq)

[Reaction Scheme 2] SOx+H₂O→H₂SO₄(aq)

That is, in the cathode unit 110, the nitrogen oxide (NOₓ) or sulfur oxide (SOₓ) supplied to the cathode unit 110 is subjected to a spontaneous chemical reaction with water (H₂O) of the first aqueous solution 115 to produce nitric acid (HNO₃) or Sulfuric acid (H₂SO₄). The generated nitric acid (HNO₃) or sulfuric acid (H₂SO₄) is subjected to a spontaneous reaction to produce hydrogen ions (H⁺) and salts (NO₃⁻, HSO₄⁻, SO₄²⁻).

In addition, an electrical reaction as shown in the following Reaction Scheme 3 occurs in the cathode unit 110.

[Reaction Scheme 3] 2H⁺(aq)+2e⁻→H₂(g)

That is, in the cathode unit 110, the hydrogen cation (H⁺) receives an electron (e⁻) to generate hydrogen (H2) gas. The generated hydrogen (H2) gas is discharged to the outside through the first outlet 113.

In addition, a complex hydrogen evolution reaction as shown in the following Reaction Scheme 4 or Reaction Scheme 5 occurs in the cathode unit 110.

[Reaction Scheme 4] 2H₂O(l)+2NOx(g)+2e⁻→H₂(g)+2NO₃⁻(aq)

[Reaction Scheme 5] 2H₂O(l)+2SOx(g)+2e⁻→H₂(g)+2HSO₃⁻(aq)

In addition, when the anode 158 is made of zinc (Zn), an oxidation reaction as shown in the following Reaction Scheme 6 occurs in the anode unit 150.

[Reaction Scheme 6] Zn+4OH⁻→Zn(OH)₄²⁻+2e Zn(OH)₄²⁻→ZnO+H₂O+2OH⁻

Therefore, when the anode 158 is made of zinc (Zn), the reaction scheme of the overall reaction occurring in a reaction process is the same as the following Reaction Scheme 7 or Reaction Scheme 8.

[Reaction Scheme 7] Zn+2NaOH+2HNO3(aq)→ZnO+H₂O+H₂+2NaNO₃(aq)

[Reaction Scheme 8] Zn+2NaOH+H₂SO₄(aq)→ZnO+H₂O+H₂+2NaSO₄(aq)

When the anode 158 is made of aluminum (Al), an oxidation reaction as shown in the following Reaction Scheme 9 occurs in the anode unit 150.

[Reaction Scheme 9] Al+3OH⁻→Al(OH)₃+3e⁻

Therefore, when the anode 158 is made of aluminum (Al), the reaction scheme of the overall reaction occurring in a reaction process is the same as the following Reaction Scheme 10 or Reaction Scheme 11.

[Reaction Scheme 10] 2Al+6NaOH+6HNO₃(aq)→2Al(OH)₃+3H₂+6NaNO₃(aq)

[Reaction Scheme 7] 2Al+6NaOH+3H₂SO₄(aq)→2Al(OH)₃+3H₂+6Na₂SO₄(aq)

As a result, as can be seen from Reaction Scheme 7, Reaction Scheme 8, Reaction Scheme 10, and Reaction Scheme 11, the hydrogen ions produced by nitrogen oxide (NOₓ) or sulfur oxide (SOₓ) eluted from the first aqueous solution 115 during the reaction receive electrons from the cathode 118, and are thus reduced to hydrogen gas, and the hydrogen gas is discharged through the first outlet 113, and the metal anode 158 is changed into an oxide form. As the reaction proceeds, nitrate (NO₃⁻) or sulfate (HSO₄⁻ or SO₄²⁻) is produced in the first aqueous solution 115. When the aqueous solution contains sodium ions (Na⁺) as in the case of sodium hydroxide (NaOH), sodium ions are diffused in order to balance the ions, and thus, sodium nitrate (NaNO₃), sodium hydrogen sulfate (NaHSO₄), or sodium sulfate (Na₂SO₄) is exists as ions in the form of an aqueous solution. When it is filtered out, NOₓ or SOₓ, which is a pollutant contained in the exhaust gas, may be removed.

The exhaust gas purification system 100b according to an embodiment of the present disclosure includes a connection unit 190 configured to connect a cathode unit 110 and an anode unit 150, and the connection unit 190 is disposed between a first accommodation space 111 and a second accommodation space 151 and is a porous ion transfer member 192 which blocks the movement of a first aqueous solution 115 and a second aqueous solution 155 and allows the movement of ionic materials dissolved in the aqueous solutions.

In the cathode unit 110, a first inlet 112, a first outlet 113, and a first connection hole 114, all of which communicate with the first accommodation space 111, are formed. The first connection hole 114 is positioned below a water surface of the first aqueous solution 115, and the connection unit 190 is connected to the first connection hole 114.

In the anode unit 150, a second connection hole 154 that communicates with the second accommodation space 151 is formed. The second connection hole 154 is positioned below a water surface of the second aqueous solution 155, and the connection unit 190 is connected to the second connection hole 154.

The connection unit 190 according to an embodiment of the present disclosure is a porous ion transfer member, and includes a connection passage 191 which connects the cathode unit 110 and the anode unit 150 and an ion transfer member 192 provided inside the connection passage 191.

The connection passage 191 is disposed between the first connection hole 114 formed in the cathode unit 110 and the second connection hole 154 formed in the anode unit 150 and allows the first accommodation space 111 of the cathode unit 110 and the second accommodation space 151 of the anode unit 150 to communicate with each other. The ion transfer member 192 is installed inside the connection passage 191.

The ion transfer member 192 generally has a disk shape, and is installed in a form which blocks the inside of the connection passage 191. The ion transfer member 192 allows the movement of ions between the cathode unit 110 and the anode unit 150 and blocks the movement of the aqueous solutions 115, 155 therebetween due to having a porous structure. It is described in the present embodiment that the ion transfer member is made of glass, but the present disclosure is not limited thereto, and other materials with a porous structure may also be used and are included in the scope of the present disclosure. In the present embodiment, as the ion transfer member 192, porous glass with a pore size of 40 to 90 microns corresponding to a G2 grade, 15 to 40 microns corresponding to a G3 grade, 5 to 15 microns corresponding to a G4 grade, or 1 to 2 microns corresponding to a G5 grade, may be used. Since the ion transfer member 192 transfers only ions, ionic imbalance generated in a reaction process may be solved.

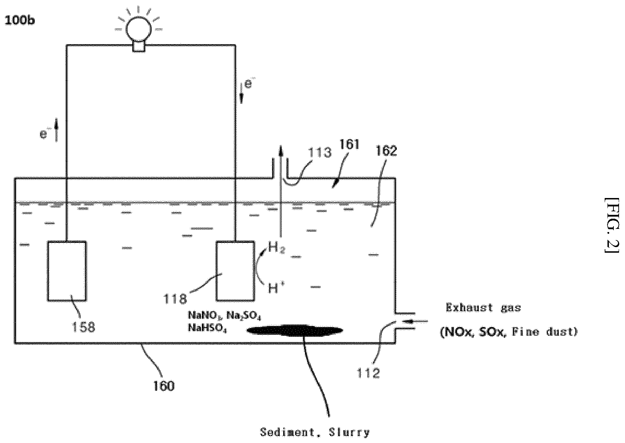

FIG. 2 illustrates the configuration of an exhaust gas purification system 100b according to still another embodiment of the present disclosure. Referring to FIG.2, an exhaust gas purification system 100b according to still another embodiment of the present disclosure includes a reaction space 161 which accommodates an aqueous solution 162, a cathode 118 at least partially submerged in the aqueous solution 162 in the reaction space 161, and a metal anode 158 at least partially submerged in the aqueous solution 162 in the reaction space 161.

A reaction vessel 160 provides the reaction space 161 which contains the aqueous solution 162 and accommodates the cathode 118 and the anode 158. In the reaction vessel 160, a first inlet 112 and a first outlet 113, both of which communicate with the reaction space 161, are formed. The first inlet 112 is positioned at a lower part of the reaction space 161 so that it is positioned below a water surface of the aqueous solution 162. The first outlet 113 is positioned at an upper part of the reaction space 161 so that it is positioned above a water surface of the aqueous solution 162. Nitrogen oxide (NOₓ) or sulfur oxide (SOₓ) used as a fuel in a reaction process is introduced into the reaction space 161 through the first inlet 112, and, if necessary, the aqueous solution 162 may also be introduced. Hydrogen (H2) produced in a reaction process is discharged to the outside through the first outlet 113. The first inlet 112 and the first outlet 113 may be selectively opened and closed by a valve (not illustrated), etc., during a reaction in a timely manner. The first connection hole 114 is positioned below a water surface of the first aqueous solution 115, and the connection unit 190 is connected to the first connection hole 114. In the reaction space 161, an elution reaction of nitrogen oxide (NOₓ) or sulfur oxide (SOₓ) occurs during a reaction process.

The aqueous solution 162 is contained in the reaction space 161, and at least a part of the cathode 118 and at least a part of the anode 158 are submerged in the aqueous solution 162. It is described in the present embodiment that a basic solution or seawater is used as the aqueous solution 162. The aqueous solution 162 becomes weakly acidic due to the carbon dioxide gas introduced through the first inlet 112 in a reaction process.

The cathode 118 is at least partially submerged in the aqueous solution 162 in the reaction space 161. The cathode 118 is positioned relatively closer to the first inlet 112 than the anode 158 in the reaction space 161. The cathode 118 is an electrode for forming an electrical circuit, and may be carbon paper, a carbon fiber, carbon felt, carbon cloth, metal foam, a metal thin film, or combinations thereof, and a platinum catalyst may also be used. In the case of a catalyst, in addition to a platinum catalyst, all other catalysts generally usable as a catalyst for a hydrogen evolution reaction (HER), such as carbon-based catalysts, carbon-metal-based complex catalysts, and perovskite oxide catalysts, etc., may also be used. During a reaction, a reduction reaction occurs in the cathode 118, and accordingly, hydrogen is generated.

The anode 158 is at least partially submerged in the aqueous solution 162 in the reaction space 161. The anode 158 is positioned relatively farther from the first inlet 112 than the cathode 118 in the reaction space 161. The anode 158 is a metal electrode for forming an electrical circuit, and it is described in the present embodiment that vanadium (V), chromium (Cr), manganese (Mn), iron (Fe), cobalt (Co), nickel (Ni), copper (Cu), aluminum (Al), or zinc (Zn) is used as the anode 158. During a reaction, an oxidation reaction occurs in the anode 158 due to a weakly acidic environment.

The reaction process of the exhaust gas purification system 100b is the same as that of Reaction Scheme 1 to Reaction Scheme 11 described above.

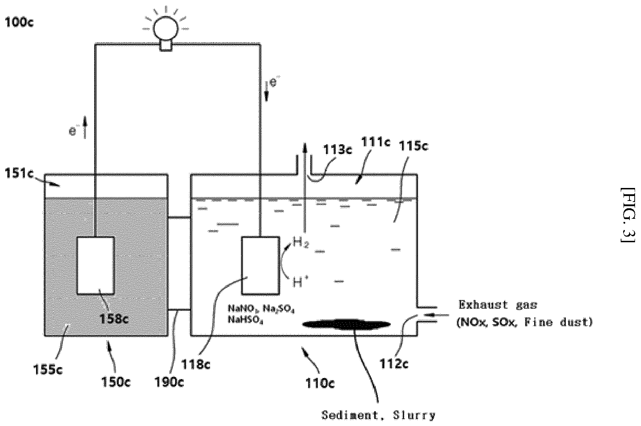

FIG. 3 illustrates the configuration of an exhaust gas purification system 100c according to still another embodiment of the present disclosure. Referring to FIG. 3, an exhaust gas purification system 100 according to an embodiment of the present disclosure includes a cathode unit 110c including a first accommodation space 111c, an aqueous electrolyte 115c, and a cathode 118c at least partially submerged in the aqueous electrolyte 115c; an anode unit 150c including a second accommodation space 151c, an electrolyte 155c, and a metal anode 158c at least partially submerged in the electrolyte 155c; and a solid electrolyte 190c disposed between the cathode unit 110c and the anode unit 150c so that the metal selectively passes through the ionized metal ions.

The exhaust gas purification system 100 according to an embodiment of the present disclosure uses nitrogen oxide (NOₓ) or sulfur oxide (SOₓ), which is pollutants contained in an exhaust gas, as raw materials through an electrochemical reaction to produce electricity and hydrogen (H₂), which is an environmentally friendly fuel.

The cathode unit 110c includes an aqueous electrolyte 115c contained in a first accommodating space 111c, one side of which is partitioned by a solid electrolyte 190c, and a cathode 118c at least partially submerged in the aqueous electrolyte 115c.

As the aqueous electrolyte 115c, a neutral aqueous electrolyte solution, a basic aqueous electrolyte solution, an electrolyte containing chlorine ions, seawater, tap water, and distilled water, etc., may be used.

The cathode 118c is an electrode for forming an electrical circuit, and may be carbon paper, a carbon fiber, carbon felt, carbon cloth, metal foam, a metal thin film, or combinations thereof, and platinum catalyst may also be used. In the case of the catalyst, in addition to the platinum catalyst, a carbon-based catalyst, a carbon-metal-based composite catalyst, a perovskite oxide catalyst, etc., may be used, and all other catalysts are also included.

In the cathode unit 110c, a first inlet 112c and a first outlet 113c, both of which communicate with the first accommodation space 111c, are formed. The first inlet 112c is positioned at a lower part of the first accommodation space 111 so that it is positioned below a water surface of the aqueous electrolyte 115c. The first outlet 113c is positioned at an upper part of the first accommodation space 111c so that it is positioned above a water surface of the aqueous electrolyte 115c. Nitrogen oxide (NOₓ) or sulfur oxide (SOₓ) used as a fuel in a reaction process is introduced into the first accommodation space 111c through the first inlet 112c, and, if necessary, the aqueous electrolyte 115c may also be introduced. Hydrogen (H2) produced in a reaction process is discharged to the outside through the first outlet 113c. Although not illustrated, a valve or the like is provided so that the inlet 112c and the outlet 113c may be selectively opened and closed by the valve, etc., during a reaction in a timely manner. In the cathode unit 110c, an elution reaction of nitrogen oxide (NOₓ) or sulfur oxide (SOₓ) occurs during a reaction process.

The anode unit 150c includes an electrolyte 155c contained in a second accommodating space 151c, one side of which is partitioned by a solid electrolyte 190c, and an anode 158c at least partially submerged in the electrolyte 155c.

The electrolyte 155c may be an organic electrolyte, and propylene carbonate (PC), ethylene carbonate (EC), and dimethyl carbonate (DMC), without limitation, may be used alone or in combination, in which NaClO₄ or NaPF6 is dissolved.

The anode 158c is a metal electrode for forming an electrical circuit, and is formed of sodium metal or a sodium metal-containing material so that sodium ions moved from the cathode unit 110c are reduced and stored as sodium metal, and the stored sodium metal may be oxidized. Although not illustrated, a negative electrode active material layer may be formed on a surface of the anode 158c. It is described in the present embodiment that the anode 158c is a sodium metal-containing material, but other metals (e.g., Li, Mg, etc.,) other than sodium metal may be used.

The solid electrolyte 190c is disposed between a cathode unit 110c and an anode unit 150c in the form of a wall, so that both surfaces thereof are in contact with an aqueous electrolyte 111c accommodated in a first accommodation space 116 of the cathode unit 110c, and an electrolyte 151c accommodated in a second accommodation space 126 of the anode unit 150c, respectively. The solid electrolyte 190c selectively passes only sodium ions between the cathode unit 110c and the anode unit 150c. In the present embodiment, it is described that the solid electrolyte 190c is formed of Na₃Zr₂Si₂PO₁₂, which is a Na super ion conductor (NASICON) in order to efficiently transfer sodium ions.

Hereinafter, the reaction process of the exhaust gas purification system 100 described above with respect to the configuration will be described in detail.

FIG. 3 also illustrates the reaction process of the exhaust gas purification system 100. Referring to FIG. 3, nitrogen oxide (NOx) or sulfur oxide (SOx) is injected into the aqueous electrolyte 115c through the inlet 112c, and chemical elution reactions of nitrogen oxide (NOₓ) or sulfur oxide (SOₓ) as shown in the following Reaction Scheme 1 and Reaction Scheme 2 occur in the cathode unit 110c.

[Reaction Scheme 1] NOx+H₂O→2HNO₃(aq)

[Reaction Scheme 2] SOx+H₂O→H₂SO₄(aq)

That is, in the cathode unit 110c, the nitrogen oxide (NOₓ) or sulfur oxide (SOₓ) supplied to the cathode unit 110c is subjected to a spontaneous chemical reaction with water (H₂O) of the aqueous electrolyte 115c to produce nitric acid (HNO₃) or sulfuric acid (H₂SO₄). The generated nitric acid (HNO₃) or sulfuric acid (H₂SO₄) is subjected to a spontaneous reaction to produce hydrogen ions (H⁺) and salts (NO₃⁻, HSO₄⁻, SO₄²⁻).

In addition, the generated nitric acid (HNO₃) supplies hydrogen ions (H⁺), such that an electrical reaction as shown in the following Reaction Scheme 12 occurs in the cathode unit 110c.

[Reaction Scheme 12] 2Na(s)+2HNO₃O(aq)→H₂(g)+2NaNO₃(aq) E^{o}2.71V

The generated sulfuric acid (H₂SO₄) also supplies hydrogen ions (H⁺), such that an electrical reaction as shown in the following Reaction Scheme 13 occurs in the cathode unit 110c.

[Reaction Scheme 13] 2Na(s)+H₂SO₄(aq)→H₂(g)+Na₂SO₄(aq) E^{o}2.71V

That is, in the cathode unit 110c, the hydrogen cation (H⁺) receives an electron (e⁻) to generate hydrogen (H₂) gas. The generated hydrogen (H₂) gas is discharged to the outside through the first outlet 113c.

In addition, an electrical reaction as shown in the following Reaction Scheme 14 occurs in the anode unit 150c.

[Reaction Scheme 14] 2Na(s)→2Na⁺(aq)+2e⁻

That is, in the anode unit 150c, sodium (Na) is decomposed into sodium cations (Na⁺) and electrons (e⁻), and the sodium cations (Na⁺) are transferred to the cathode unit 110c by the solid electrolyte 190c.

The salt (NO₃⁻) remaining in the aqueous electrolyte 115c is electronically balanced with the sodium cation (Na⁺) that has moved from the anode unit 150c to the cathode unit 110c, and sodium nitrate (NaNO₃), sodium hydrogen sulfate (NaHSO₄), or sodium sulfate (Na₂SO₄) and hydrogen (H2) are produced. The produced sodium nitrate (NaNO₃), sodium hydrogen sulfate (NaHSO₄), or sodium sulfate (Na₂SO₄) exists in the form of an aqueous solution in the aqueous electrolyte 111c, and when it is filtered out, NOx or SOx, which is a pollutant included in the exhaust gas, may be removed. The generated hydrogen (H2) gas is discharged to the outside through the first outlet 113c.

As a result, as can be seen from Reaction Scheme 1, Reaction Scheme 2, Reaction Scheme 12, Reaction Scheme 13, and Reaction Scheme 14, the hydrogen ions produced by nitrogen oxide (NOₓ) or sulfur oxide (SOₓ) eluted from the aqueous electrolyte 115c during the reaction receive electrons from the cathode 118c, and are thus reduced to hydrogen gas, and the hydrogen gas is discharged through the first outlet 113c.

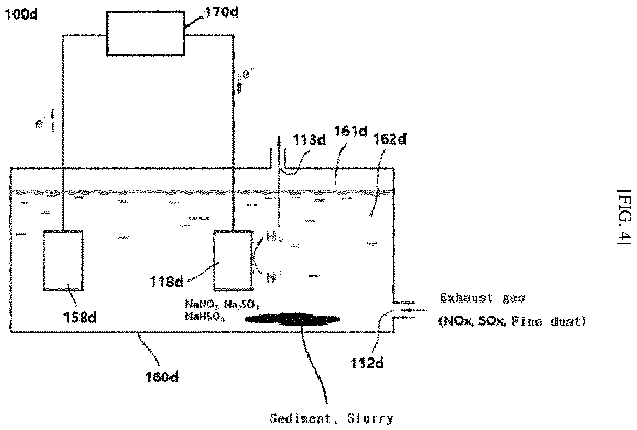

FIG. 4 illustrates the configuration of an exhaust gas purification system according to an embodiment of the present disclosure. Referring to FIG. 4, an exhaust gas purification system 100d according to an embodiment according to the present disclosure includes: a reaction vessel 160d forming a reaction space 161d, an aqueous electrolyte solution 162d accommodated in the reaction space 161d and containing a chlorine anion, a cathode 118d at least partially submerged in the aqueous electrolyte solution 162d in the reaction space 161d, an anode 158d at least partially submerged in an aqueous electrolyte solution 162d in the reaction space 161d, and a power source 170d electrically connected to the cathode 118d and the anode 158d.

A reaction vessel 160d provides the reaction space 161d which contains the aqueous solution 162d and accommodates the cathode 118d and the anode 158d. In the reaction vessel 160d, an inlet 112d communicating with the reaction space 161d may be formed. The inlet 112d is positioned at a lower part of the reaction space 161 so that it is positioned below a water surface of the aqueous electrolyte solution 162d. Nitrogen oxide (NOₓ) or sulfur oxide (SOₓ) used as a fuel in a reaction process is introduced into the reaction space 161d through the inlet 112d, and, if necessary, the aqueous electrolyte solution 162d may also be introduced.

In addition, the reaction vessel may include a hydrogen outlet 113d for discharging the generated hydrogen. The hydrogen outlet 113d is preferably positioned at an upper part of the cathode 118d of the reaction space 161d so that it is positioned above a water surface of the aqueous electrolyte solution 162d. Hydrogen (H2) produced in a reaction process is discharged to the outside through the hydrogen outlet 113d.

Although not illustrated, a valve or the like is provided so that the inlet 112d and the hydrogen outlet 113d may be selectively opened and closed by the valve, etc., during a reaction in a timely manner.

The aqueous electrolyte solution 162d is contained in the reaction space 161d, and at least a part of the cathode 118d and at least a part of the anode 158d are submerged in the aqueous electrolyte solution 162d. The aqueous electrolyte solution 162d is an aqueous electrolyte solution containing chlorine ions (Cl⁻), such as seawater or salt water, and it is described in the present embodiment that the aqueous electrolyte solution 162d is an aqueous sodium chloride (NaCl) solution. Accordingly, the aqueous electrolyte solution 162d includes sodium cations (Na⁺) and chlorine anions (Cl⁻). The aqueous electrolyte solution 162d becomes weakly acidic by nitrogen oxide or sulfur oxide introduced through the inlet 112d during the reaction process.

The cathode 118d is at least partially submerged in the aqueous electrolyte solution 162d in the reaction space 161d. The cathode 118d is positioned relatively closer to the inlet 112d than the anode 158d in the reaction space 161d. The cathode 118d is electrically connected to a negative electrode of a power source 170d to receive electrons from the power source 170d. The cathode 118d is an electrode for forming an electrical circuit, and may be carbon paper, a carbon fiber, carbon felt, carbon cloth, metal foam, a metal thin film, or combinations thereof, and a platinum catalyst may also be used. In the case of a catalyst, in addition to a platinum catalyst, all other catalysts generally usable as a catalyst for a hydrogen evolution reaction (HER), such as carbon-based catalysts, carbon-metal-based complex catalysts, and perovskite oxide catalysts, etc., may also be used. During a reaction, a reduction reaction occurs in the cathode 118d, and accordingly, hydrogen is generated.

The anode 158d is at least partially submerged in the aqueous electrolyte solution 162d in the reaction space 161d. The anode 158d is electrically connected to a positive electrode of a power source 170d to supply electrons to the power source 170d. In the present embodiment, it is described that vanadium (V), chromium (Cr), manganese (Mn), iron (Fe), cobalt (Co), nickel (Ni), copper (Cu), aluminum (Al), or zinc (Zn) is used as the anode 158d.

In the case of a catalyst, in addition to a platinum catalyst, all other catalysts generally usable as a catalyst for a chlorine evolution reaction, such as carbon-based catalysts, carbon-metal-based complex catalysts, and perovskite oxide catalysts, etc., may also be used. In the anode (158d), chlorine evolution reaction (CER) occurs by an oxidation reaction.

The power source 170d provides electrical energy to the exhaust gas purification system 100d. The positive electrode of the power source 170d is electrically connected to the anode 158d of the exhaust gas purification system 100d, and the negative electrode of the power source 170d is electrically connected to the cathode 118d of the exhaust gas purification system 100d. As the power source 170d, any type of power source capable of providing electrical energy, including renewable energy such as solar cells and wind power generation, may be used. The exhaust gas purification system 100d may use electrical energy supplied from the power source 170d to generate hydrogen and chlorine from carbon dioxide as a raw material, thereby removing nitrogen oxide or sulfur oxide, which is fine dust generating substances.

Hereinafter, the reaction process of the exhaust gas purification system 100d described above with respect to the configuration will be described in detail.

FIG. 4 also illustrates the reaction process of the exhaust gas purification system 100d. Referring to FIG. 4, nitrogen oxide (NOₓ) or sulfur oxide (SOₓ) is injected into the aqueous electrolyte solution 162d in the reaction space 161d through the inlet 112d, and a chemical elution reaction as shown in the following Reaction Scheme 1 or Reaction Scheme 2 occurs.

[Reaction Scheme 1] NOx+H₂O→2HNO₃(aq)

[Reaction Scheme 2] SOx+H₂O→H₂SO₄(aq)

That is, nitrogen oxide (NOₓ) or sulfur oxide (SOₓ) supplied to the aqueous electrolyte solution 162d in the reaction space 161d spontaneously chemically reacts with water (H₂O) in the aqueous electrolyte solution 162d to produce nitric acid (HNO₃) or sulfuric acid (H₂SO₄). The generated nitric acid (HNO₃) or sulfuric acid (H₂SO₄) spontaneously generates hydrogen ions (H⁺) and salts (NO₃⁻, HSO₄⁻, SO₄²⁻).

In addition, an electrical reaction as shown in the following Reaction Scheme 3 occurs in the cathode 118d.

[Reaction Scheme 3] 2H⁺(aq)+2e⁻→H₂(g)

That is, in the cathode 118d, the hydrogen cation (H⁺) receives an electron (e⁻) to generate hydrogen (H₂) gas. The generated hydrogen (H₂) gas is discharged to the outside through the hydrogen outlet 113d.

In addition, a complex hydrogen evolution reaction as shown in the following Reaction Scheme 4 or Reaction Scheme 5 occurs in the cathode 118d.

[Reaction Scheme 4] 2H₂O(l)+2NOx(g)+2e⁻→H₂(g)+2NO₃⁻(aq)

[Reaction Scheme 5] 2H₂O(l)+2SOx(g)+2e⁻→H₂(g)+2HSO₃⁻(aq)

Also, a chlorine evolution reaction as shown in the following Reaction Scheme 15 occurs in the anode 158d.

[Reaction Scheme 15] 2Cl⁻(aq)→Cl₂(g)+2e⁻(E⁰=1.36 V Vs. SHE)

As a result, depending on whether the nitrogen oxide (NOₓ) or sulfur oxide (SOₓ) is included in the gas supplied to the aqueous electrolyte solution 162d, the final overall reaction scheme is as follows Reaction Scheme 16 or Reaction Scheme 17, respectively.

[Reaction Scheme 16] 2NaCl(aq)+2HNO₃(aq)→H₂+Cl₂+2NaNO₃(aq) E^{o}=1.36 V

[Reaction Scheme 17] 2NaCl(aq)+H₂SO₄(aq)→H₂+Cl₂+Na₂SO₄(aq) E^{o}=1.36 V

As can be seen from Reaction Scheme 16 and Reaction Scheme 17, since hydrogen ions (H⁺) disappear after an electrolysis reaction, a pH of the aqueous electrolyte solution 162d increases and becomes basic, such that nitrogen oxide (NOₓ) or sulfur oxide (SOₓ) introduced through the inlet may be continuously dissolved. The aqueous electrolyte solution 162d, which was initially an aqueous sodium chloride (NaCl) solution, is gradually changed into an aqueous sodium nitrate (NaNO₃) or sodium sulfate (Na₂SO₄) solution as the reaction continues.

Although it has been described in the present embodiment that an aqueous sodium chloride (NaCl) solution is used as the aqueous electrolyte solution 162d, a solution containing other cations such as an aqueous potassium chloride (KCl) solution or an aqueous calcium chloride (CaCl₂) solution may be used instead of an aqueous sodium chloride solution, and in this case, nitrate or sulfate corresponding thereto may be produced.

In addition, the exhaust gas purification system 100d may maintain a pH of the aqueous electrolyte solution 162d at a set value or more by adjusting the amount of chlorine generated at the anode so that the amount of nitrogen oxide or sulfur oxide dissolved in the aqueous electrolyte solution 162d is maintained at a set value or more.

Meanwhile, when a solution free of chlorine ions (Cl⁻) is used as the aqueous electrolyte solution 162d, an oxygen evolution reaction as shown in the following Reaction Scheme 17 occurs in the anode 158d.

[Reaction Scheme 17] 4OH⁻→O₂+2H₂O+4e⁻

Accordingly, the pH of the aqueous electrolyte solution 162d does not change, and thus, nitrogen oxide or sulfur oxide is not additionally dissolved.

As a result, as can be seen from Reaction Scheme 1 to Reaction Scheme 5, Reaction Scheme 15, and Reaction Scheme 16, the hydrogen ions produced by nitrogen oxide (NOₓ) or sulfur oxide (SOₓ) eluted from the aqueous electrolyte solution 162d during the reaction receive electrons from the cathode 118, and are thus reduced to hydrogen gas, and the hydrogen gas is discharged through the hydrogen outlet 113d. As the reaction proceeds, nitrate (NO₃⁻) or sulfate (HSO₄⁻ or SO₄²⁻) is produced in the aqueous electrolyte solution 115. When the aqueous solution contains sodium ions (Na⁺) as in the case of sodium hydroxide (NaOH), sodium ions are diffused to balance the ions, and thus, sodium nitrate (NaNO₃), sodium hydrogen sulfate (NaHSO₄), or sodium sulfate (Na₂SO₄) is exists as ions in the form of an aqueous solution. When it is filtered out, NOₓ or SOₓ, which is a pollutant contained in the exhaust gas, may be removed.

Meanwhile, the exhaust gas purification systems 100a, 100b, and 100c according to an embodiment according to the present disclosure may not only remove sodium nitrate (NaNO₃), sodium hydrogen sulfate (NaHSO₄), or sodium sulfate (Na₂HSO₄) produced after the reaction by filtration, drying, or precipitation using a precipitating agent, but also may directly filter fine dust (carbon compounds, organics, inorganics, metals, or a salt thereof, etc.) having a size of 0.01 to 100 µm contained in the exhaust gas in addition to NOₓ or SOₓ, with an aqueous solution to remove the fine dust from the exhaust gas.

The fine dust may become a sediment by adding moisture in the aqueous solution to be made to be a slurry or a suspended matter, and the precipitate, slurry, and suspended matter thus produced may be removed using methods such as separation, filtration, coagulation, and discharge.

While the present disclosure has been described above with reference to the exemplary embodiments, the present disclosure is not limited thereto. The above embodiments may be modified or changed without departing from the scope and spirit of the present disclosure, and it will be understood by those skilled in the art that these modifications and changes are also included in the scope of the present disclosure.

### [Industrial Applicability]

The present disclosure may be usefully used in an exhaust gas purification system capable of purifying exhaust gas containing nitrogen oxide and sulfur oxide which cause the generation of fine dust, through an electrochemical reaction and producing hydrogen.

## Claims

1. An exhaust gas purification system, comprising:
a cathode unit including a first accommodation space, a first aqueous solution, and a cathode at least partially submerged in the first aqueous solution;
an anode unit including a second accommodation space, a second aqueous solution which is basic, and a metal anode at least partially submerged in the second aqueous solution; and
a connection unit configured to connect the cathode unit and the anode unit,
wherein the anode is made of aluminum (Al) or zinc (Zn),
a gas containing nitrogen oxide (NOₓ) is injected into the first aqueous solution,
the nitrogen oxide injected into the first aqueous solution reacts with water to produce nitric acid (HNO₃),
the nitric acid supplies hydrogen ions, and
the hydrogen ions and electrons of the cathode react to produce hydrogen.

2. An exhaust gas purification system, comprising:
a cathode unit including a first accommodation space, a first aqueous solution, and a cathode at least partially submerged in the first aqueous solution;
an anode unit including a second accommodation space, a second aqueous solution which is basic, and a metal anode at least partially submerged in the second aqueous solution; and
a connection unit configured to connect the cathode unit and the anode unit,
wherein the anode is made of aluminum (Al) or zinc (Zn),
a gas containing sulfur oxide (SOₓ) is injected into the first aqueous solution,
the sulfur oxide injected into the first aqueous solution reacts with water to produce sulfuric acid (H₂SO₄),
the sulfuric acid supplies hydrogen ions, and
the hydrogen ions and electrons of the cathode react to produce hydrogen.

3. The exhaust gas purification system of claim 1 or 2, wherein the connection unit is disposed between the first accommodation space and the second accommodation space and is a porous ion transfer member which blocks the movement of the first aqueous solution and the second aqueous solution and allows the movement of ions.

4. The exhaust gas purification system of claim 3, wherein the ion transfer member is made of glass.

5. The exhaust gas purification system of claim 4, wherein pores having a size of 40 to 90 microns, 15 to 40 microns, 5 to 15 microns, or 1 to 2 microns are formed in the ion transfer member.

6. The exhaust gas purification system of claim 1 or 2, wherein the cathode unit includes a first outlet configured to discharge the produced hydrogen, and the first outlet is positioned above a water surface of the first aqueous solution.

7. The exhaust gas purification system of claim 1 or 2, wherein the exhaust gas further includes fine dust having a particle size of 0.01 to 100 µm,and
the fine dust becomes a slurry in the first aqueous solution in the first accommodation space.

8. An exhaust gas purification system, comprising:
a reaction space which accommodates an aqueous solution;
a cathode at least partially submerged in the aqueous solution in the reaction space; and
a metal anode at least partially submerged in the aqueous solution in the reaction space,
wherein the anode is made of vanadium (V), chromium (Cr), manganese (Mn), iron (Fe), cobalt (Co), nickel (Ni), copper (Cu), aluminum (Al), or zinc (Zn),
the nitrogen oxide injected into the aqueous solution reacts with water to produce nitric acid (HNO₃),
the nitric acid supplies hydrogen ions, and
the hydrogen ions and electrons of the cathode react to produce hydrogen.

9. An exhaust gas purification system, comprising:
a reaction space which accommodates an aqueous solution;
a cathode at least partially submerged in the aqueous solution in the reaction space; and
a metal anode at least partially submerged in the aqueous solution in the reaction space,
wherein the anode is made of vanadium (V), chromium (Cr), manganese (Mn), iron (Fe), cobalt (Co), nickel (Ni), copper (Cu), aluminum (Al), or zinc (Zn),
the sulfur oxide injected into the aqueous solution reacts with water to produce sulfuric acid (H₂SO₄),
the sulfuric acid supplies hydrogen ions, and
the hydrogen ions and electrons of the cathode react to produce hydrogen.

10. The exhaust gas purification system of claim 8 or 9, wherein the reaction space includes a first outlet configured to discharge the produced hydrogen, and the first outlet is positioned above a water surface of the aqueous solution.

11. The exhaust gas purification system of claim 8 or 9, wherein the exhaust gas further includes fine dust having a particle size of 0.01 to 100 µm,and
the fine dust becomes a slurry in the aqueous solution in the reaction space.

12. An exhaust gas purification system, comprising:
a cathode unit including a first accommodation space, an aqueous electrolyte, and a cathode at least partially submerged in the aqueous electrolyte;
an anode unit including a second accommodation space, an electrolyte which is a basic, and a metal anode at least partially submerged in the electrolyte; and
a solid electrolyte disposed between the cathode unit and the anode unit so that the metal selectively passes through the ionized metal ions,
wherein a gas containing nitrogen oxide (NOₓ) is injected into the aqueous electrolyte,
the nitrogen oxide injected into the aqueous electrolyte reacts with water to produce nitric acid (HNO₃),
the nitric acid supplies hydrogen ions,
the hydrogen ions and electrons of the cathode react to produce hydrogen, and
when a gas containing the nitrogen oxide (NOₓ) is injected into the aqueous electrolyte of the cathode unit, reactions as shown in the following Reaction Scheme 1 and Reaction Scheme 12 occur:
[Reaction Scheme 1] NOx+H₂O→2HNO₃(aq)
[Reaction Scheme 12] 2Na(s)+2HNO₃O(aq)→H₂(g)+2NaNO₃(aq)

13. An exhaust gas purification system, comprising:
a cathode unit including a first accommodation space, an aqueous electrolyte, and a cathode at least partially submerged in the aqueous electrolyte;
an anode unit including a second accommodation space, an electrolyte which is a basic, and a metal anode at least partially submerged in the electrolyte; and
a solid electrolyte disposed between the cathode unit and the anode unit so that the metal selectively passes through the ionized metal ions,
wherein a gas containing sulfur oxide (SOₓ) is injected into the aqueous electrolyte,
the sulfur oxide injected into the aqueous electrolyte reacts with water to produce sulfuric acid (H₂SO₄),
the sulfuric acid supplies hydrogen ions,
the hydrogen ions and electrons of the cathode react to produce hydrogen, and
when a gas containing the sulfur oxide (SOₓ) is injected into the aqueous electrolyte of the cathode unit, reactions as shown in the following Reaction Scheme 2 and Reaction Scheme 13 occur.
[Reaction Scheme 2] SOx+H₂O→H₂SO₄(aq)
[Reaction Scheme 13] 2Na(s)+H₂SO₄(aq)→H₂(g)+Na₂SO₄(aq)

14. The exhaust gas purification system of claim 12 or 13, wherein the solid electrolyte is formed of Na₃Zr₂Si₂PO₁₂.

15. The exhaust gas purification system of claim 12 or 13, wherein the anode is made of sodium metal.

16. The exhaust gas purification system of claim 12 or 13, wherein the cathode unit includes a first outlet configured to discharge the produced hydrogen, and the first outlet is positioned above a water surface of the aqueous electrolyte.

17. The exhaust gas purification system of claim 12 or 13, wherein the exhaust gas further includes fine dust having a particle size of 0.01 to 100 µm,and
the fine dust becomes a slurry in the aqueous electrolyte in the first accommodation space

18. An exhaust gas purification system, comprising:
a reaction vessel forming a reaction space;
an aqueous electrolyte solution accommodated in the reaction space and containing a chlorine anion;
a cathode at least partially submerged in the aqueous electrolyte solution in the reaction space;
an anode at least partially submerged in an aqueous electrolyte solution in the reaction space, and
a power source electrically connected to the cathode and the anode,
wherein a gas containing nitrogen oxide (NOₓ) is injected into the aqueous electrolyte solution,
the nitrogen oxide injected into the aqueous electrolyte solution reacts with water to produce nitric acid (HNO₃),
the nitric acid supplies hydrogen ions, and
the hydrogen ions and electrons of the cathode react to produce hydrogen.

19. An exhaust gas purification system, comprising:
a reaction vessel forming a reaction space;
an aqueous electrolyte solution accommodated in the reaction space and containing a chlorine anion;
a cathode at least partially submerged in the aqueous electrolyte solution in the reaction space;
an anode at least partially submerged in an aqueous electrolyte solution in the reaction space, and
a power source electrically connected to the cathode and the anode,
wherein a gas containing sulfur oxide (SOₓ) is injected into the aqueous electrolyte solution,
the sulfur oxide injected into the aqueous electrolyte solution reacts with water to produce sulfuric acid (H₂SO₄),
the sulfuric acid supplies hydrogen ions, and
the hydrogen ions and electrons of the cathode react to produce hydrogen.

20. The exhaust gas purification system of claim 18, wherein the exhaust gas purification system maintains a pH of the aqueous electrolyte solution at a set value or more by adjusting an amount of chlorine generated at the anode so that an amount of nitrogen oxide (NOₓ) dissolved in the aqueous electrolyte solution is maintained at a set value or more.

21. The exhaust gas purification system of claim 19, wherein the exhaust gas purification system maintains a pH of the aqueous electrolyte solution at a set value or more by adjusting an amount of chlorine generated at the anode so that an amount of sulfur oxide (SOₓ) dissolved in the aqueous electrolyte solution is maintained at a set value or more.

22. The exhaust gas purification system of claim 18 or 19, wherein the aqueous electrolyte solution includes one or more selected from the group consisting of sodium chloride, potassium chloride, and calcium chloride.

23. The exhaust gas purification system of claim 18 or 19, wherein the cathode is made of carbon paper, carbon fiber, carbon felt, carbon cloth, metal foam, a metal thin film, a platinum catalyst, or combinations thereof.

24. The exhaust gas purification system of claim 18 or 19, wherein the anode is made of vanadium (V), chromium (Cr), manganese (Mn), iron (Fe), cobalt (Co), nickel (Ni), copper (Cu), aluminum (Al), or zinc (Zn).

25. The exhaust gas purification system of claim 18 or 19, wherein the reaction vessel includes a hydrogen outlet configured to discharge the produced hydrogen, and the hydrogen outlet is positioned above a water surface of the aqueous electrolyte solution.

26. The exhaust gas purification system of claim 18 or 19, wherein the exhaust gas further includes fine dust having a particle size of 0.01 to 100 µm,and
the fine dust becomes a slurry in the aqueous electrolyte solution in the reaction space.
